# EUROPEAN PATENT APPLICATION

(11) **EP 4 400 732 A1**
(43) Date of publication of application: **17.07.2024**
(21) Application number: 22866321.7
(22) Date of filing: 11.08.2022
(51) Int. Cl.: F16B 39/02, F16B 37/00

(54) **ANTI-DISASSEMBLY CONNECTOR**

(30) Priority: 07.09.2021 CN 202122152076 U
(71) Applicant: Zhejiang Dunan Artificial Environment Co., Ltd., Shaoxing Zhejiang 311800 (CN)
(72) Inventor: LOU, Feng, Shaoxing, Zhejiang 311800 (CN); CHEN, Diyong, Shaoxing, Zhejiang 311800 (CN); ZHOU, Feng, Shaoxing, Zhejiang 311800 (CN); WANG, Bin, Shaoxing, Zhejiang 311800 (CN)
(74) Representative: Studio Torta S.p.A.
(86) International application number: PCT/CN2022/111746
(87) International publication number: WO 2023/035847

(57) **Abstract**

An anti-disassembly connector, belonging to the technical field of mechanical design. The anti-disassembly connector comprises a body (1), and the body (1) may comprise a first end surface (9) and a second end surface (10) disposed opposite to each other. The first end surface (9) is provided with a protruding portion, the protruding portion comprising a first protruding portion and a second protruding portion. The first protruding portion comprises a first force receiving surface (2) and a first force relief surface (4), and a projection of the first force relief surface (4) in a first direction is arc-shaped and disposed at an angle relative the first end surface (9). The second protruding portion comprises a second force receiving surface (5) and a second force relief surface (7), and a projection of the second force relief surface (7) in the first direction is arc-shaped and disposed at an angle relative to the first end surface (9). In this way, the first force relief surface (4) and the second force relief surface (7) cannot be clamped when an adjustable spanner is used to unscrew a nut, so that the anti-disassembly connector can prevent disassembly.

## Description

### CROSS REFERENCE TO RELATED APPLICATION

The present application claims the priority of Chinese patent application No. 202122152076.4, titled " ANTI-DISASSEMBLY CONNECTOR" submitted on September 7, 2021, and hereby cites the entire disclosures of the aforementioned Chinese patent application as part of the present application.

### TECHNICAL FIELD

The present invention relates to the field of mechanical design technology, in particular to an anti-disassembly connector.

### BACKGROUND

Nowadays, split-type air conditioners with noncombustible refrigerants use a pipe joint and a connecting nut to connect the evaporator and connecting pipe on the indoor side, while a detachable body is not allowed on the indoor side of air conditioners that use combustible refrigerants.

In the prior design, when opening the valve, the split-type unit adopts a solution of directly welding the evaporator and the connecting pipe on the indoor side, and quickly connecting the body on the outdoor side. Although it can meet the standards and safety requirements, it requires the fitting of the pipe joint and the connecting nut, which causes a complex installation process, high cost, and poor sealing. The pipe joint and the connecting nut are prone to loosening, which can lead to refrigerant leakage and cannot meet the assembly standards and safety requirements.

The above-mentioned information disclosed in the background section is only intended to enhance the understanding of the background disclosed herein, and therefore may include information that does not constitute prior art known to those skilled in the art.

### SUMMARY

The purpose of the present disclosure is to provide an anti-disassembly connector that can achieve forward installation and reverse anti-disassembly functions.

To achieve the above-mentioned invention objective, the present disclosure adopts the following technical solution:

According to the first aspect of the present disclosure, an anti-disassembly connector is provided, the anti-disassembly connector comprises a body, and the body comprises a first end surface and a second end surface disposed opposite to each other, the first end surface is provided with a protruding portion, the protruding portion comprising:

A first protruding portion comprises a first force receiving surface and a first force relief surface; the first force receiving surface is perpendicular to the first end surface, and the first force relief surface is disposed at an angle relative to the first end surface; the projection of the first force relief surface along a first direction intersects with the outer wall of the body to form as a second edge; the projection of the first force relief surface along the first direction is arc-shaped, and the first direction is perpendicular to the first end surface;

A second protruding portion comprises a second force receiving surface and a second force relief surface; the second force receiving surface is perpendicular to the first end surface; the second force relief surface is disposed at an angle relative to the first end surface, and the projection of the second force relief surface along the first direction is arc-shaped;

A third plane is formed between the first force relief surface and the second force receiving surface, and the third plane is located at the first end surface, the outer wall of the third plane is a third edge; the length of the second edge is greater than the length of the third edge.

In an exemplary embodiment of the present disclosure, the first protruding portion further comprises a first plane, the first plane connects the first force receiving surface and the first force relief surface, the first plane is parallel to the first end surface, and the projection of the first plane along the first direction intersects with the outer wall of the body to form as a first edge; the second protruding portion further comprises a second plane, the second plane connects the second force receiving surface and the second force relief surface, and the second plane is parallel to the first end surface; the length of the second edge is greater than the sum of the length of the first edge and the length of the third edge.

In an exemplary embodiment of the present disclosure, the first force receiving surface intersects with the first end surface to form as a first straight line; the second force receiving surface intersects with the first end surface to form as a second straight line, and the second force relief surface intersects with the first end surface to form as a third straight line;

The angle between the extension of the first straight line and the extension of the third straight line is less than the angle between the extension of the second straight line and the extension of the third straight line.

In an exemplary embodiment of the present disclosure, the angle between the second straight line and the third straight line is 130° to 150° .

In an exemplary embodiment of the present disclosure, the first protruding portion and the second protruding portion are central symmetry along the first end surface.

In an exemplary embodiment of the present disclosure, the angle between the first force relief surface and the first end surface is 20° to 50°; the angle between the second force relief surface and the first end surface is 20° to 50° .

In an exemplary embodiment of the present disclosure, the body is provided with a through hole, and the inner wall of the through hole is provided with a thread; the outer wall of the body is also provided with a nut.

In an exemplary embodiment of the present disclosure, the distance between the first protruding portion and the second protruding portion is not less than the diameter of the through hole.

In an exemplary embodiment of the present disclosure, chamfers are provided on the outer side of the first and second force relief surfaces, and chamfers are provided on the inner side of the first and second force receiving surfaces.

In an exemplary embodiment of the present disclosure, the anti-disassembly connector is an integrated structure.

When an adjustable spanner (open spanner) is used to clamp the first force receiving edge where the first force receiving surface intersects with the outer wall of the body in the first direction and the second force receiving edge where the second force receiving surface intersects with the outer wall of the body in the first direction, the nut can achieve forward installation. In addition, due to the fact that the projection of the first and second relief surfaces in the first direction is an arc-shaped surface, and the first and second relief surfaces are disposed at an angle relative to the first end surface, it is impossible for the adjustable spanner to clamp the first and second relief surfaces when removing the nut in reverse, thusly enabling the nut to achieve the function of reverse anti-disassembly. In addition, since the length of the second edge is greater than the sum of the length of the first edge and the length of the third edge, this can ensure that the first force relief surface and the second force relief surface have sufficient length to avoid the situation where the adjustable spanner directly clamps both sides of the first and second force receiving surfaces, thereby avoid affecting the anti-disassembly effect of the nut.

### BRIEF DESCRIPTION OF THE DRAWINGS

The above and other features and advantages of the present disclosure will become more apparent by referring to the detailed description of the exemplary embodiments in the accompanying drawings.
Figure 1 is a schematic diagram of the structure of an anti-disassembly connector according to the embodiment of the present disclosure.
Figure 2 is a schematic diagram of the structure of another anti-disassembly connector according to the embodiment of the present disclosure.

The reference numbers of the main components in the figures are explained as follows:
1. body; 2. first force receiving surface; 3. first plane; 4. first force relief surface; 5. second force receiving surface; 6. second plane; 7. second force relief surface; 8. through hole; 9. first end surface; 10. second end surface; 11. third plane.

### DETAILED DESCRIPTION

The exemplary embodiments will now be described in detailed by referring to the accompanying drawings. However, exemplary embodiments can be implemented in multiple forms and should not be understood as limited to the examples described herein. Instead, providing these embodiments would make the present disclosure more comprehensive and complete, and would comprehensively convey the concept of exemplary embodiments to those skilled in the art. The described features, structures, or characteristics may be combined in any suitable manner in one or more embodiments. In the following description, many specific details are provided to provide a full understanding of the embodiments disclosed herein.

The described features, structures, or characteristics may be combined in any suitable manner in one or more embodiments. In the following description, many specific details are provided to provide a full understanding of the embodiments disclosed herein. However, those skilled in the art will realize that the disclosed technical solution can be practiced without one or more of the specific details described, or other methods, components, materials, etc. may be employed. In other cases, it is not necessary to detail or describe the well-known structure, materials, or operations to avoid blurring the main technical ideas disclosed herein.

When a certain structure is "on" another structure, it may refer to a structure being formed as a whole on another structure, or a structure being "directly" set on another structure, or a structure being "indirectly" set on another structure through other structure.

The terms "one", "a", "the" are used to indicate the existence of one or more elements/components/etc; the terms "comprise" and " include" are used to indicate open inclusion and refer to the possibility of additional elements/components/etc. in addition to the listed ones. The terms "first" and "second" are only used as markers and are not a limitation on the number of their objects.

Nowadays, the indoor side of the split-type air conditioners with ordinary working medium use a pipe joint and a connecting nut to connect the evaporator and connecting pipe. While, a detachable body is not allowed to be used on the indoor side of air conditioners that use combustible refrigerants. In the prior design, when opening the valve, the split-type unit adopts a solution of directly welding the evaporator and the connecting pipe on the indoor side, and quickly connecting the body on the outdoor side. Although it can meet the standards and safety requirements, it requires the fitting of the pipe joint and the connecting nut, which causes a complex installation process, high cost, and poor sealing. The pipe joint and the connecting nut are prone to loosening, which can lead to refrigerant leakage and cannot meet the assembly standards and safety requirements.

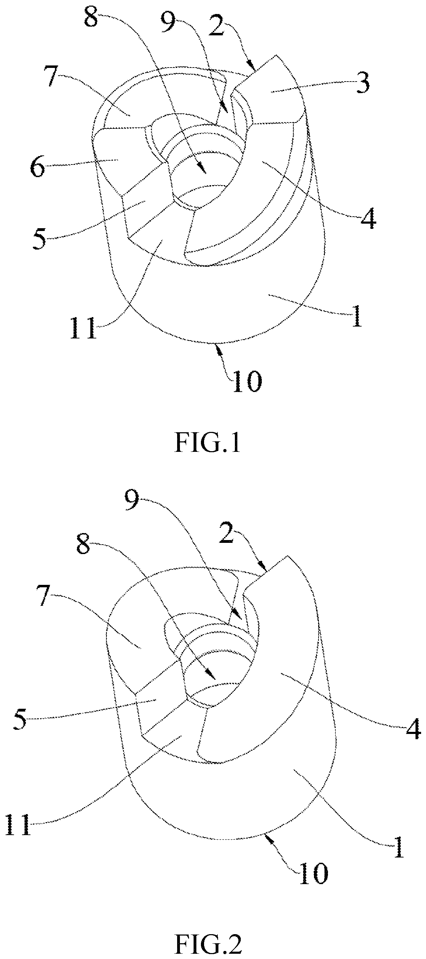

In the embodiment of the present disclosure, an anti-disassembly connector is provided, as shown in Figure 1. The anti-disassembly connector may include a body 1, which can include a first end surface 9 and a second end surface 10 that are disposed opposite to each other. The first end surface 9 is provided with a protruding portion, which can include a first protruding portion and a second protruding portion. The first protruding portion can include a first force receiving surface 2 and a first force relief surface 4. The first force receiving surface 2 is perpendicular to the first end surface 9, and the first force relief surface 4 is disposed at an angle relative to the first end surface 9. The projection of the first force relief surface 4 along the first direction intersects with the outer wall of the body 1 to form as a second edge. The projection of the first force relief surface 4 along the first direction is arc-shaped, and the first direction is perpendicular to the first end surface 9. The second protruding portion can include a second force receiving surface 5 and a second force relief surface 7. The second force receiving surface 5 is perpendicular to the first end surface 9. The second force relief surface 7 is disposed at an angle relative to the first end surface 9, and the projection of the second force relief surface 7 along the first direction is arc-shaped. A third plane 11 can be formed between the first force relief surface 4 and the second force receiving surface 5. The third plane 11 is located on the first end surface 9, and the outer wall of the third plane 11 is a third edge. The length of the second edge is greater than the length of the third edge.

When using an adjustable spanner (open spanner) to clamp a first force receiving edge where the first force receiving surface 2 intersects with the outer wall of the body in the first direction and the second force receiving edge where the second force receiving surface 5 intersects the outer wall of the body in the first direction, the nut can achieve forward installation. In addition, due to the fact that the projection of the first force relief surface 4 and the second force relief surface 7 in the first direction is arc-shaped, and the first force relief surface 4 and the second force relief surface 7 are disposed at an angle relative to the first end surface 9, it is impossible for the adjustable spanner to clamp the first relief surface 4 and the second relief surface 7 when removing the nut in reverse, thereby enabling the nut to achieve the function of reverse anti-disassembly. In addition, due to the length of the second edge being greater than the sum of the length of the first edge and the length of the third edge, it can ensure that the first force relief surface 4 and the second force relief surface 7 have sufficient length to avoid the situation where the adjustable spanner directly clamps both sides of the force relief surface and the force receiving surface, thereby avoid affecting the anti-disassembly effect of the nut.

A detailed illustration of each component of the nut according to this disclosed embodiment is provided in the following in conjunction with the accompanying drawings.

In one embodiment disclosed herein, the first plane 3 and a second plane 6 can be completely identical, that is, the dimensions and shapes of the first plane 3 and the second plane 6 are the same. Wherein, the first plane 3 and the second plane 6 pass through the axis direction of the body 1, that is, the first plane 3 and the second plane 6 are distributed radially along the body 1.

In another embodiment of the present disclosure, the protruding portion may not include the first plane 3 and the second plane 6. Referring to Figure 2, the first protruding portion can include the first force receiving surface 2 and the first force relief surface 4; the second protruding portion can include the second force receiving surface 5 and the second force relief surface 7. The first force receiving surface 2 and the second force receiving surface 5 are parallel and perpendicular to the first end surface 9. The projection of the first relief surface 4 and the second relief surface 7 in the first direction is arc-shaped. This can simplify the structure of anti-disassembly connectors, but still have the function of anti-disassembly.

Alternatively, chamfers are provided on the outer sides of the first force relief surface 4 and the second force relief surface 7, as well as chamfers are provided on the inner sides of the first force receiving surface 2 and the second force receiving surface 5.

Alternatively, the first protruding portion further includes the first plane, which connects the first force receiving surface and the first force relief surface. The first plane is parallel to the first end surface, and the projection of the first plane along the first direction intersects with the outer wall of the body to form as the first edge. The second protruding portion further includes a second plane, which connects the second force receiving surface and the second force relief surface, and the second plane is parallel to the first end surface. The length of the second edge is greater than the sum of the length of the first edge and the length of the third edge.

In one embodiment of the present disclosure, the first force receiving surface 2 intersects with the first end surface 9 to form as a first straight line. The second force receiving surface 5 intersects with the first end surface 9 to form as a second straight line, and the second force relief surface 7 intersects with the first end surface 9 to form as a third straight line. The angle between the extension of the first straight line and the extension of the third straight line is smaller than the angle between the extension of the second straight line and the extension of the third straight line. This can ensure that the first force relief surface 4 and the second force relief surface 7 of the nut have sufficient length to prevent the adjustable spanner from directly clamping the first force relief surface 4 and the second force relief surface 7 during reverse anti-disassembly, thereby avoid affecting the function of reverse anti-disassembly of the nut.

Alternatively, the angle between the extension of the second straight line and the extension of the third straight line can be 130° to 160° . For example, it can be 135° , 143° , 150° , etc. The present disclosure does not make any special restrictions on the angle between them, as long as it can meet the function of anti-disassembly connectors.

Alternatively, the angle between the first force relief surface 4 and the first end surface 9, or between the second force relief surface 7 and the first end surface 9 can be 20° to 50°. For example, it can be 30° , 35° , 40° , etc. As an example, when the angle between the first force relief surface 4 and the first end surface 9 or between the second force relief surface 7 and the first end surface 9 is 30° , that is, the angle between the plane where the first force relief surface 4 is located and the first end surface 9 is 30° , and the angle between the plane where the second force relief surface 7 is located and the first end surface 9 is 30°. At this angle, the adjustable spanner can easily rise along the first force relief surface 4 and the second force relief surface 7, and thusly it is impossible for the adjustable spanner to clamp the first force relief surface 4 and the second force relief surface 7. This can further strengthen the reverse anti-disassembly function of the nut. It is worth noting that the angle between the first force relief surface 4 and the first end surface 9, or between the second force relief surface 7 and the first end surface 9 can be the same or different. For example, the angle between the first force relief surface 4 and the first end surface 9 can be 30° , and the angle between the second force relief surface 7 and the first end surface 9 can be 40° . In addition, the angle between the first force relief surface 4 and the first end surface 9, or between the second force relief surface 7 and the first end surface 9 shall not exceed 60° .

Alternatively, when the anti-disassembly connector is a nut, a through hole 8 is provided inside the body 1. One end of the through hole 8 is used for the connecting pipe, and the inner wall of the other end of the through hole 8 is provided with a thread, which is used to connect the pipe joint. The outer wall of the body 1 can also be provided with a thread. The distance between the first protruding portion and the second protruding portion is not less than the diameter of the through hole 8. If the distance between the first protruding portion and the second protruding portion is less than the diameter of the through hole 8, it will cause the anti-disassembly connector cannot be installed on the pipe joint or the diameter of the connecting pipe to be smaller than the diameter of the pipe joint connecting pipe, resulting in throttling. If the distance between the first protruding portion and the second protruding portion is greater than or equal to the diameter of the through hole 8, the anti-disassembly connector can be installed smoothly on the pipe joint without affecting the flow rate of the pipeline.

In an embodiment of the present disclosure, when the anti-disassembly connector is a pipe joint, the interior of the body 1 is provided with the through hole 8. One end of the through hole 8 is used for the connecting pipe, and the outer wall of the body 1 at the other end of the through hole 8 is provided with a threaded, which is used for connecting the nut. The distance between the first protruding portion and the second protruding portion is not less than the diameter of the through hole 8. If the distance between the first protruding portion and the second protruding portion is less than the diameter of the through hole 8, it will cause the connecting pipe to be smaller than the nut connecting pipe, resulting in throttling. If the distance between the first protruding portion and the second protruding portion is greater than or equal to the diameter of the through hole 8, the anti-disassembly joint can be smoothly installed on the nut without affecting the flow rate of the pipeline.

Alternatively, the first and second protruding portions are central symmetry along the first end surface 9. That is, the first force receiving surface 2, the first force relief surface 4, the second force receiving surface 5, and the second force relief surface 7 are alternately distributed in the circumferential direction along the first end surface 9. Furthermore, the first and second protruding portions are symmetrically distributed at 180° . This can enable the adjustable spanner to better clamp the first and second force receiving edges separately during forward installation, making the receiving forces more uniform and making it easier for the adjustable spanner to tighten the nut. When the adjustable spanner clamps the first force relief surface 4 and the second force relief surface 7 respectively, symmetrical distribution of the first force relief surface 4 and the second force relief surface 7 can make the adjustable spanner rise more smoothly along the first force relief surface 4 and the second force relief surface 7, and thusly it is impossible for the adjustable spanner to loosen the nut, ensuring that the nut cannot be removed, and effectively preventing refrigerant leakage.

Alternatively, the first force receiving surface 2 and the second force receiving surface 5 are arranged parallel. By arranging the first force receiving surface 2 and the second force receiving surface 5 in parallel, the first force receiving surface 2 and the second force receiving surface 5 can more effectively accept external forces from the adjustable spanner when the adjustable spanner clamping the first force receiving surface 2 and the second force receiving surface 5, thereby improving the efficiency of nut tightening.

In one embodiment of the present disclosure, the anti-disassembly connector is an integrated structure. Specifically, in this embodiment, the anti-disassembly connector is formed by integral stamping. The protruding portion and the body 1 can also be fixed by welding, clamping, or integrated pouring. This can make the overall structure of the anti-disassembly connector more stable and compact. At the same time, it can also improve the sealing performance when the anti-disassembly connector is matched with the pipe joint.

It should be understood that the present disclosure does not limit its application to the detailed structure and arrangement of the components proposed in the description. The present disclosure can have other embodiments and can be implemented and executed in multiple ways. The aforementioned forms of deformation and modification fall within the scope of the present disclosure. It should be understood that the disclosure and limitations of the present description extend to all substitutable combinations of two or more individual features mentioned or apparent in the text and/or drawings. All these different combinations constitute multiple alternative aspects of the present disclosure. The embodiments of the present description illustrate the best known method for implementing the present disclosure, and will enable those skilled in the art to utilize the present disclosure.

## Claims

1. An anti-disassembly connector comprising: a body, the body comprises a first end surface and a second end surface disposed opposite to each other, the first end surface is provided with a protruding portion, the protruding portion comprising:
a first protruding portion, comprising a first force receiving surface and a first force relief surface; the first force receiving surface is perpendicular to the first end surface, and the first force relief surface is disposed at an angle relative to the first end surface; the projection of the first force relief surface along a first direction intersects with the outer wall of the body to form as a second edge; the projection of the first force relief surface along the first direction is arc-shaped, and the first direction is perpendicular to the first end surface;
a second protruding portion, comprising a second force receiving surface and a second force relief surface; the second force receiving surface is perpendicular to the first end surface; the second force relief surface is disposed at an angle relative to the first end surface, and the projection of the second force relief surface along the first direction is arc-shaped;
a third plane is formed between the first force relief surface and the second force receiving surface, and the third plane is located at the first end surface, the outer wall of the third plane is a third edge; the length of the second edge is greater than the length of the third edge.

2. The anti-disassembly connector of claim 1, wherein the first protruding portion further comprises a first plane, the first plane connects the first force receiving surface and the first force relief surface, the first plane is parallel to the first end surface, the projection of the first plane along the first direction intersects with the outer wall of the body to form as a first edge; the second protruding portion further comprises a second plane, the second plane connects the second force receiving surface and the second force relief surface, and the second plane is parallel to the first end surface; the length of the second edge is greater than the sum of the length of the first edge and the length of the third edge.

3. The anti-disassembly connector of claim 1, wherein the first force receiving surface intersects with the first end surface to form as a first straight line; the second force receiving surface intersects with the first end surface to form as a second straight line, and the second force relief surface intersects with the first end surface to form as a third straight line;
the angle between the extension of the first straight line and the extension of the third straight line is less than the angle between the extension of the second straight line and the extension of the third straight line.

4. The anti-disassembly connector of claim 3, wherein the angle between the second straight line and the third straight line is 130° to 150° .

5. The anti-disassembly connector of claim 1, wherein the first protruding portion and the second protruding portion are central symmetry along the first end surface.

6. The anti-disassembly connector of claim 1, wherein the angle between the first force relief surface and the first end surface is 20° to 50° ; the angle between the second force relief surface and the first end surface is 20° to 50° .

7. The anti-disassembly connector of claim 1, wherein the body is provided with a through hole, and the inner wall of the through hole is provided with a thread; the outer wall of the body is also provided with a nut.

8. The anti-disassembly connector of claim 7, wherein the distance between the first protruding portion and the second protruding portion is not less than the diameter of the through hole.

9. The anti-disassembly connector of claim 1, wherein chamfers are provided on the outer sides of the first and second force relief surfaces, and chamfers are provided on the inner sides of the first and second force receiving surfaces.

10. The anti-disassembly connector of claim 1, wherein the anti-disassembly connector is an integrated structure.
